# EUROPEAN PATENT SPECIFICATION

(11) **EP 2 894 773 B1**
(45) Date of publication and mention of the grant of the patent: **07.06.2017**
(21) Application number: 14764262.3
(22) Date of filing: 07.03.2014
(51) Int. Cl.: H02K 24/00, G01D 5/20, G01D 11/24

(54) **RESOLVER**
KOORDINATENWANDLER
RÉSOLVEUR

(30) Priority: 15.03.2013 JP 2013052855
(43) Date of publication of application: 15.07.2015
(73) Proprietor: Panasonic Intellectual Property Management Co., Ltd., Osaka-shi, Osaka 540-6207 (JP)
(72) Inventor: SHIMODA, Kazuhiro, Osaka-shi Osaka 540-6207 (JP); KONDO, Kenji, Osaka-shi Osaka 540-6207 (JP); ECHIZEN, Yasuji, Osaka-shi Osaka 540-6207 (JP); OKUDA, Yasuhiko, Osaka-shi Osaka 540-6207 (JP)
(74) Representative: Schwabe - Sandmair - Marx
(86) International application number: PCT/JP2014/001280
(87) International publication number: WO 2014/141655

(56) References cited:
- EP-A2- 2 568 580
- JP-A- 2002 272 050
- JP-A- 2003 032 989
- JP-A- 2005 337 821
- JP-A- 2007 202 263
- JP-A- 2008 245 385
- JP-A- 2010 101 633
- JP-A- 2010 161 891
- US-A1- 2008 169 713

## Description

### TECHNICAL FIELD

The present invention relates to a rotational position detector according to claim 1 (also referred to as "resolvers") in which a stator core is fixed to a housing equipped with a transformer. The stator core has a winding, i.e. a conductor wound on the core.

### BACKGROUND ART

Conventionally, rotational position detectors such as resolvers have been used in driving units of industrial robots and the like. Specifically, a rotational position detector is used in a driving unit which determines a work position when an industrial robot works. Moreover, such the rotational position detector is used in another driving unit to carry out screw fastening. The rotational position detector is equipped with a stator core in the inside of its housing.

The rotational position detector is required to maintain its ability to provide sufficient accuracy of position information and the like which the detector obtains. In addition, the rotational position detector is required to secure high durability. To meet these requirements, the stator core is required to be securely fixed to the housing with low stresses, in the rotational position detector.

In the rotational position detector, the stator core can be fixed to the housing by various methods including shrink-fitting, press-fitting, and welding.

The shrink-fitting is carried out in the following manner. That is, a housing is heated to thermally expand. Into the inside of the thermally-expanded housing, a stator core is inserted. The housing, with the stator core being inserted therein, is then cooled to shrink. As a result, the shrinkage causes the stator core to be fixed to the inside of the housing.

However, in the shrink-fitting, the stator core is subjected to a large stress due to the shrinkage of the housing when it is cooled. The application of the large stress to the stator core causes a decrease in magnetic permeability of the core. As a result, the rotational position detector manufactured by shrink-fitting has sometimes offered a deteriorated function of detecting positional information.

Moreover, the press-fitting is carried out in the following manner. That is, a stator core is simply pressed to fit into the inside of a housing. The press-fitted stator core is fixed to the inside of the housing.

The press-fitting causes the stator core to be deformed due to an external force applied to the stator core when the stator core is pressed to fit into the inside of the housing. The deformation of the stator core, in turn, produces a stress attributed to the deformation, resulting in a decrease in magnetic permeability of the stator core. As a result, the rotational position detector manufactured by press-fitting has sometimes offered a deteriorated function of detecting positional information.

Furthermore, the welding is carried out as follows: That is, a stator core is arranged in the inside of the housing. Then, the arranged stator core is welded to the housing to fix them.

In the welding, a part of the stator core, which contributes to the welding, exhibits a decreased magnetic permeability. The locally-decreased magnetic permeability causes an imbalance in magnetism of the stator core. As a result, the rotational position detector manufactured by welding has sometimes offered a deteriorated function of detecting positional information.

In addition, Patent Literature 1 and Patent Literature 2 disclose other methods of fixing the stator core to the housing.

Patent Literature 1 discloses a method of screw-fitting as follows: A stator core is provided with holes. Into the holes, screws are screwed to fix the stator core to the body of a rotary device.

Patent Literature 2 discloses the following method. That is, a stator core is applied with an adhesive. The adhesive-applied stator core is fixed to a housing.

### Citation List

### Patent Literatures

PTL 1: Japanese Patent Unexamined Publication No. 2005-65418
PTL 2: Japanese Patent Unexamined Publication No. 2013-34387

### SUMMARY OF THE INVENTION

A rotational position detector according to the present invention includes the features set forth in claim 1 encompassing a housing, a rotor, a stator core, insulators, and a transformer core.

The housing has a cylindrical shape with a center axis, and has an inner peripheral surface that extends along the center axis.

The rotor is housed in the housing, and includes a rotary shaft along the center axis.
The stator core is housed in the housing, and includes an inner surface facing the rotor, an outer surface facing the inner peripheral surface, a first plane located orthogonal to the center axis, and a second plane located orthogonal to of the center axis and on the Opposite side to the first plane. The first and second planes are located above and below each other, respectively. The insulators, on each of which a winding is wound, are respectively disposed on the first plane and the second plane.

The transformer core is such that, when a primary voltage is excited in the winding, a secondary voltage is induced in the transformer core.

Moreover, the inner peripheral surface and the outer surface are located with a gap therebetween in a range of not smaller than 50 µm and not larger than 150 µm. In the gap, an anaerobic adhesive is disposed.

Advantageous embodiments are defined by the subclaims.

### BRIEF DESCRIPTION OF DRAWINGS

FIG. 1 is a perspective assembly view illustrating an outline of a rotational position detector according to a first embodiment of the present invention.
FIG. 2 is a cross-sectional view of a principal part of the rotational position detector according to the first embodiment of the invention.
FIG. 3 is a cross-sectional view of a principal part of a rotational position detector according to a second embodiment of the present invention.

### DESCRIPTION OF EMBODIMENTS

A rotational position detector according to embodiments of the present invention employs an anaerobic adhesive to fix a stator core in the inside of a housing. A stress is relieved which is applied on the stator core when the anaerobic adhesive cures and shrinks. As a result, this configuration allows the rotational position detector to feature high durability and a function of detecting position information with high accuracy.

Incidentally, conventional rotational position detectors have had the following problems to be improved. That is, with the configuration described in Patent Literature 1, holes to fix screws therein need to be disposed in a magnetic path generated by a stator core. This causes the magnetic path generated by the stator core to have different portions, i.e. wider-path portions and narrower-path portions. The presence of such different portions results in a magnetic imbalance in the magnetic path generated by the stator core. As a result, the function of detecting position information deteriorates, which reduces accuracy of the detected position information.

On the other hand, Patent Literature 2 has proposed a method of fixing a stator core to a housing by applying an adhesive on the outer periphery of the stator core. In the method described in Patent Literature 2, the applied adhesive may exhibit nonuniformity in thickness of the adhesive when it is applied to the outer periphery of the stator core. This nonuniformity causes a stress on the stator core which is due to a nonuniform shrinkage of the adhesive when it cures. The stress applied on the stator core due to the nonuniform shrinkage, in turn, locally reduces magnetic permeability of the stator core. Consequently, the stator core exhibits a magnetic imbalance. The magnetic imbalance described above, which results in reduced accuracy of the detected position information, is required to be improved, in applications, in particular, where highly accurate detection of position information is required.

In addition, strength of the fixation of the stator core to the housing has not been considered in view of durability required for rotational position detectors.

To address these problems, the rotational position detector to be described later according to the embodiments of the present invention is used to prevent a reduction in accuracy of the detected position information.

Hereinafter, the embodiments of the present invention will be described with reference to the drawings and tables. It is noted, however, that the embodiments described below are nothing more than an example of implementation of the present invention, and are not intended to limit the technical scope of the present invention.

### FIRST EXEMPLARY EMBODIMENT

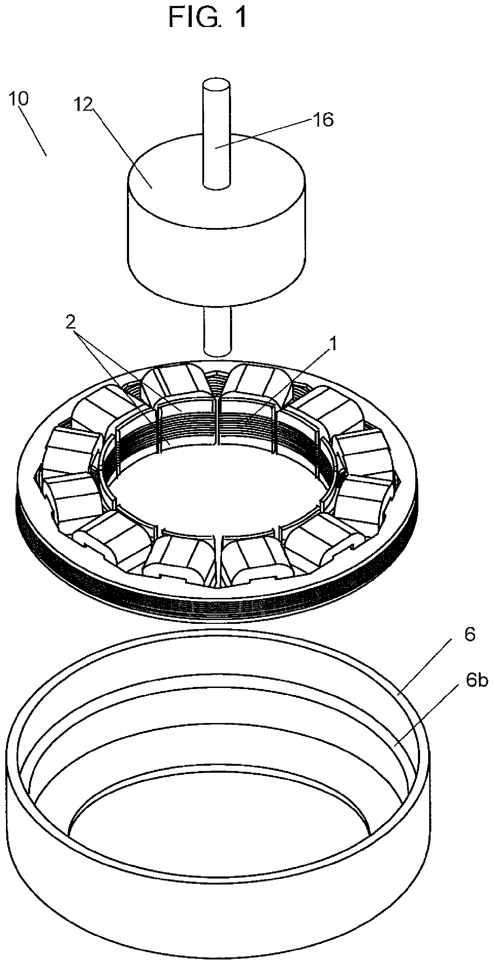

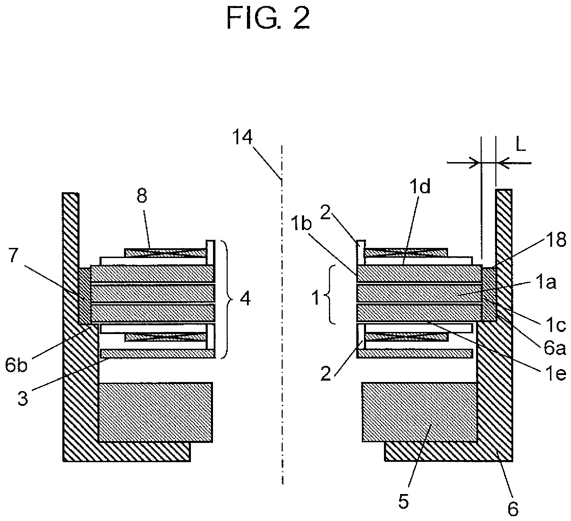

FIG. 1 is a perspective assembly view illustrating an outline of a rotational position detector according to a first embodiment of the present invention. FIG. 2 is a cross-sectional view of a principal part of the rotational position detector according to the first embodiment of the invention.

As shown in FIGS. 1 and 2, rotational position detector 10 according to the present invention includes housing 6, rotor 12, stator core 1, insulators 2, and transformer core 5.

Housing 6 has a cylindrical shape with center axis 14, and has inner peripheral surface 6a that extends along center axis 14.

Rotor 12 is housed in housing 6, and includes rotary shaft 16 that extends along center axis 14.

Stator core 1 is housed in housing 6, and includes inner surface 1b facing rotor 12, outer surface 1c facing inner peripheral surface 6a, first plane 1d located orthogonal to the center axis, and second plane 1e located orthogonal to the center axis and on the opposite side to the first plane 1d. The first and second planes are located above and below each other respectively.

Insulators 2, on which winding 8 is wound, are respectively disposed on first plane 1d and second plane 1e, one for each.

Transformer core 5 is such that, when a primary voltage is excited in winding 8, a secondary voltage is induced in the transformer core.

Moreover, inner peripheral surface 6a and outer surface 1c are located with gap 18 therebetween in a range of not smaller than 50 µm and not larger than 150 µm. Distance L shown in FIG. 2 indicates a distance between inner peripheral surface 6a and outer surface 1c. In gap 18, an anaerobic adhesive is disposed.

The configuration that features outstanding functions and advantages, is as follows.

Transformer core 5 includes a first transformer core and a second transformer core. The first and second transformer cores are disposed to cover a transformer winding. The first and second transformer cores are magnetically connected to each other to prevent a magnetic flux from leaking.

In the configuration of transformer core 5 including the first and second transformer cores, when a primarily voltage is induced in winding 8, a secondary voltage is induced in the first and second transformer cores.

Anaerobic adhesive 7 has a viscosity in a range of not smaller than 500 mPa ·s and not larger than 3000 mPa ·s.

Winding 8 includes base plate 3 to which end parts of winding 8 are attached.

In particular, insulators 2 may include winding attaching parts to which the end parts of winding 8 are attached. Winding 8 may be such that the end parts of winding 8 are attached to base plate 3 via the winding attaching parts.

More details are described with reference to FIG. 2.

In the first embodiment, stator core 1 is stacked layers composed of core sheets 1a each having a thickness of 0.35 mm. Stator core 1 is formed by stacking and crimping ten core sheets 1a. Stator core 1 has insulators 2 that are respectively attached on first plane 1d and second plane 1e, which are located above and below, respectively, in FIG. 2. On insulators 2, winding 8 is wound. In housing 6, transformer core 5 is disposed in advance. Anaerobic adhesive 7 is located between stator core 1 and housing 6. Stator core 1 and housing 6 are fixed to each other via anaerobic adhesive 7. Inside stator core 1, a rotor core is rotatably disposed.

Sensor core 4 includes stator core 1, insulators 2, winding 8, and base plate 3. On insulators 2, winding 8 is wound. Base plate 3 is attached to insulator 2 located on the transformer core 5 side. Base plate 3 is used to connect the wire of winding 8.

Insulators 2 each include a pin serving as a wire attaching part. On the pin, an end part of the wire of winding 8 is wound automatically with a machine. The pin is fixed by soldering to base plate 3, so that insulator 2 is fixed to base plate 3. Base plate 3, being in contact with the end part of insulator 2, is fixed in place.

Hereinafter, the points which the present invention features will be specifically described with reference to Tables 1 to 4.

Table 1 shows a comparison of methods of fixing stator core 1 to housing 6.

**Table 1**

| Method of fixing | Shrink-fitting | Press-fitting | Screw-fitting | Welding | Bonding |
|---|---|---|---|---|---|
| Stress on core | × | × | ○ | × | ○ |
| Magnetic circuit | ○ | ○ | × | × | ○ |
| Comprehensive judgment | × | × | × | × | ○ |

The shrink-fitting method, which is a Comparative Example, was already described earlier. In the shrink-fitting method, the stator core is subjected to a large stress when the housing is cooled to shrink. The large stress reduces magnetic permeability of the stator core. As a result, the rotational position detector manufactured by the shrink-fitting sometimes offers a deteriorated function of detecting position information.

The press-fitting method, which is another Comparative Example, was already described earlier. In the press-fitting method, when the stator core is pressed to fit into the inside of the housing, the stator core is deformed due to an external force applied to the stator core. In addition, a tightening force by the housing causes the stator core to deform. The deformation of the state core, in turn, produces a stress on the state core. This reduces the magnetic permeability of the stator core. As a result, the rotational position detector manufactured by the press-fitting sometimes offers a deteriorated function of detecting position information.

The screw-fitting method, yet another Comparative Example, is carried out in the following manner. Holes are made in the stator core. Using the holes, the stator core is fixed, with screws, to the body of the rotational position detector. By this screw-fitting, the stator core can be fixed to the body of the rotational position detector without stresses applied on the stator core. However, the holes to fix the screws therein are required to be disposed in a magnetic path generated by the stator core. This causes the magnetic path generated by the stator core to have different path portions, i.e. wider-path portions and narrower-path portions. That is, this causes a magnetic imbalance in the magnetic path generated by the stator core. As a result, the function of detecting position information is sometimes deteriorated.

In the welding method, i.e. still another Comparative Example, a part of the stator core, which contributes to the welding, exhibits a decrease in magnetic permeability. At the part contributing to the welding, the stator core is locally subjected to a stress due to thermal stresses caused by the welding. This local stress results in an imbalance in magnetism of the stator core. As a result, the rotational position detector manufactured by the welding sometimes offers a deteriorated function of detecting position information.

The bonding method according to the first embodiment of the present invention is such that anaerobic adhesive 7 is used to fix stator core 1 to housing 6. This boding method does not exert any adverse influence on the magnetic circuit. Moreover, the influence of a stress is relieved, which is applied on stator core 1 when anaerobic adhesive 7 cures and shrinks. Consequently, the bonding method allows rotational position detector 10 to provide high durability. In addition, the bonding method allows rotational position detector 10 to prevent its function of detecting position information from being deteriorated.

Table 2 shows a comparison of types of curing of adhesives.

**Table 2**

| Type of curing | Two-liquid mixing curable | Heat curable | Ultraviolet curable | Moisture curable | Anaerobic curable |
|---|---|---|---|---|---|
| Bonding between cores | Cured | Cured | Not cured | Not cured | Cured |
| | | | No ultraviolet irradiation of inside | hard-to-reach moisture into inside | |
| Influence of stress on core | A | × | - | - | ○ |
| | large shrinkage stress when curing | difference in thermal expansion coefficient when curing | | | |
| Workability | Δ | ○ | × | × | ○ |
| | nonuniform mixing | | unable to work due to no-curing | taking-hours before next step | |
| Reliability | ○ | ○ | × | × | ○ |
| | | | incomplete curing, lack of strength | incomplete curing, lack of strength | |
| Deformation of housing | Not occur | Occur | - | - | Not occur |
| | | residual working stress | | | |
| Comprehensive judgment | × | × | × | × | ○ |

As a Comparative Example, a case is considered that uses a two-liquid mixing curable adhesive which cures by mixing two liquids. The two-liquid mixing curable adhesive is used to fix stator core 1 to housing 6. In this case, stator core 1 is subjected to a large stress when the adhesive cures and shrinks. This reduces the magnetic permeability of stator core 1. As a result, in the case using the two-liquid mixing curable adhesive, the rotational position detector sometimes becomes deteriorated in the function of detecting position information. Moreover, the use of the two-liquid mixing curable adhesive requires control the amount of use of each of the two types of liquids to be mixed. The control of the amount of use is carried out on a weight ratio basis such that the two types of liquids are mixed in a prescribed ratio.

Moreover, once the two liquids of the mixing curable adhesive are mixed, the cure of the adhesive proceeds. Therefore, the mixture of two liquids of the mixing curable adhesive cannot be prepared in advance of use. In other words, even if it has yet to be used, the once-mixed two-liquid mixing curable adhesive cannot be reused at a later time. This implies that it is difficult to use a proper amount, without waste, of the two-liquid mixing curable adhesive, which poses a serious problem in view of workability.

As another Comparative Example, a case is considered that uses a heat curable adhesive which cures by heating. The heat curable adhesive is used to fix stator core 1 to housing 6. In this case, attention has to be paid to linear expansion coefficients of the materials concerned. That is, the heat curable adhesive is different in linear expansion coefficients from the metal material on which the heat curable adhesive is applied. The materials concerned each have a different linear expansion coefficient. The difference in linear expansion coefficients may cause a stress on stator core 1, which reduces the magnetic permeability of stator core 1. As a result, in the case using the heat curable adhesive, the rotational position detector sometimes becomes deteriorated in the function of detecting position information.

Moreover, when heat is applied to the heat curable adhesive to cure it, the applied heat is also transferred to housing 6. The heat transferred to housing 6 sometimes causes housing 6 to deform, resulting in its distortion. The distortion of housing 6, in turn, causes a magnetic imbalance inside housing 6. As a result, the rotational position detector sometimes becomes deteriorated in the function of detecting position information.

As yet another Comparative Example, a case is considered that uses an ultraviolet curable adhesive which cures by irradiating it with ultraviolet light. The ultraviolet curable adhesive is used to fix stator core 1 to housing 6. In this case, the ultraviolet curable adhesive is applied between stator core 1 and housing 6, and only the surface of the applied adhesive can be irradiated with ultraviolet light. That is, the ultraviolet light is unable to reach the deep inside of the ultraviolet curable adhesive applied between stator core 1 and housing 6. For this reason, in the ultraviolet curable adhesive applied between stator core 1 and housing 6, cure of the surface of the adhesive can proceed; however, cure of the deep inside of the adhesive cannot proceed. Therefore, the bonding strength between stator core 1 and housing 6 becomes insufficient. As a result, in the case using the ultraviolet curable adhesive, the rotational position detector is unable to provide the durability required for detecting position information.

As still another Comparative Example, a case is considered that uses a moisture curable adhesive which cures by reacting with such as water in the air. The moisture curable adhesive is used to fix stator core 1 to housing 6. In this case, the moisture curable adhesive is applied between stator core 1 and housing 6. Only the surface of the moisture curable adhesive, at which the adhesive is in contact with the air, can be cured by moisture. However, the cure by moisture cannot proceed at the inside of the moisture curable adhesive applied between stator core 1 and housing 6. Therefore, the bonding strength between stator core 1 and housing 6 becomes insufficient. As a result, in the case using the moisture curable adhesive, the rotational position detector is unable to provide the durability required for detecting position information.

The case according to the first embodiment of the present invention employs anaerobic adhesive 7 that is used to fix stator core 1 to housing 6.

In this case, housing 6 includes locking part 6b that protrudes inward from inner peripheral surface 6a of housing 6. Locking part 6b protrudes in a circumference shape along inner peripheral surface 6a. Stator core 1 inserted into the inside of housing 6 is temporally locked by locking part 6b. Note that any shape of the inner peripheral surface of housing 6 may be employed as long as stator core 1 can be temporally locked at the inside of housing 6. Moreover, provided that stator core 1 can be temporally locked, locking part 6b may have a shape in which a part of housing 6 protrudes inward along inner peripheral surface 6a.

In order to hold the stator core 1 temporally fixed with regard to the housing 6, anaerobic adhesive 7 is injected between stator core 1 and housing 6. The use of anaerobic adhesive 7 secures sufficient bonding strength between stator core 1 and housing 6, which allows rotational position detector 10 to provide the durability required for a rotational position detector. Moreover, even at room temperature, anaerobic adhesive 7 can bond the work pieces to each other and harden itself. Therefore, the anaerobic adhesive does not cause any stress on stator core 1 attributed to the difference in linear expansion coefficients of the materials concerned, i.e. the difference in linear expansion coefficients between the metal and the adhesive. This can relieve the influence of the stress applied on stator core 1 which is caused when anaerobic adhesive 7 cures and shrinks. As a result, rotational position detector 10 is allowed to prevent a reduction in accuracy of detecting position information.

The process of forming the configuration is such that anaerobic adhesive 7 is applied between stator core 1 and anaerobic adhesive 7, thereby allowing the bulk of anaerobic adhesive 7 to be shielded from the air. That is, the process is easy to carry out.

Table 3 summarizes a comparison of influences of different clearances between stator core 1 and housing 6, when stator core 1 is fixed to housing 6 with anaerobic adhesive 7. Note that, in the following descriptions of Table 3, the clearances are the dimensions indicated by "L" in FIG. 2.

**Table 3**

| Clearance (µm) | 30 | 50 | 100 | 150 | 200 | 400 |
|---|---|---|---|---|---|---|
| Curing characteristics | Cured | Cured | Cured | Cured | Cured | Not cured, in large gap |
| Workability | × | ○ | ○ | ○ | ○ | - |
| | Galling occurs | | | | | |
| Stress on core | Δ | ○ | ○ | ○ | × | - |
| | deformation stress when assy. | | | | stress when adhesive curing | |
| Comprehensive judgment | × | ○ | ○ | ○ | × | × |

For the clearance of 30 µm between stator core 1 and housing 6, the result of comprehensive judgment shows that the clearance is inappropriate for the following reasons.

That is, when stator core 1 is inserted into housing 6, stator core 1 sometimes slightly tilts relative to housing 6. At this time, the clearance is so small that the tilt poses a problem that outer surface 1c of stator core 1 touches inner peripheral surface 6a of housing 6. The problem of parts touching each other is referred to as "galling," hereinafter.

Moreover, in the embodiment, base plate 3 is composed of a resin part. This means that base plate 3 is difficult to manufacture with highly accurate dimensions. Therefore, when base plate 3 is inserted into housing 6, an excessively small clearance tends to cause the galling between the outer peripheral portion of base plate 3 and inner peripheral surface 6a of housing 6. To prevent such the galling, the insertion of the base plate requires taking great care, resulting in lower workability. Note that, when the galling occurs on outer surface 1c of stator core 1, stator core 1 is subjected to a stress, which causes a magnetic imbalance in stator core 1. As a result, rotational position detector 10 sometimes becomes deteriorated in the function of detecting position information.

Incidentally, the result of the detection by rotational position detector 10 is output as an output signal. There is a control circuit which receives the output signal as an input signal and performs control based on the input signal. Commonly, with a rotational position detector in which base plate 3 cannot be attached to sensor core 4, connection of a lead wire to winding 8 is formed in such a way that the lead wire is directly fixed to winding 8 by means of soldering or the like. The soldering work for fixing the lead wire to winding 8 is sometimes manually carried out by an operator. This work requires that each of the lead wire and winding 8 has an end part with a certain length sufficient for their wire-routing so as for the lead wire to be connected to winding 8. The lengths of the end parts of the lead wire and winding 8, which are required for their wire-routing, are changed depending on the operator. Therefore, the lengths are not always constant. In addition, after having been used for their wire-routing, the end parts of the lead wire and winding 8 have to be housed in the inside of insulator 2, for structural reasons of the rotational position detector. Such the work, being difficult to automate, results in low workability. In addition, something uneven in the work may occur depending on the individual operator, resulting in variations of detected position information by using the rotational position detector. In other words, this makes it difficult to secure accuracy of the position information that is output from the rotational position detector.

In contrast, the configuration in which base plate 3 is attached to sensor core 4 makes it possible to carry out the wire connection with a machine. With this configuration, the end part of winding 8 is connected to a pin, serving as a wire attaching part, disposed in base plate 3. The end part of the lead wire is also connected to base plate 3. That is, the end part of winding 8 is connected to the end part of the lead wire via base plate 3. Such wire-connecting work can be automated by using a machine. Consequently, the automated wire-connection work offers high workability and also allows reduced variations in accuracy of the detection by the rotational position detector. In other words, the use of base plate 3 is preferable in view of improvements in workability and accuracy of the sensing.

Moreover, when the clearance is small, a possible axial misalignment between the center axis of stator core 1 and the center axis of housing 6 sometimes has an adverse influence on the magnetic balance of stator core 1. That is, the center axes of stator core 1 and housing 6 are sometimes out of the same axis to cause a slight axial misalignment. This axial misalignment sometimes renders distance L nonuniform, which is defined by gap 18 between outer surface 1c of stator core 1 and inner peripheral surface 6a of housing 6. Therefore, the nonuniformity in distance L defined by gap 18 results in nonuniformity in the thickness of anaerobic adhesive 7 that is applied in gap 18. The nonuniformity in the thickness of anaerobic adhesive 7, in turn, deteriorates uniformity in the stress on stator core 1 which is applied in the course of shrinking of anaerobic adhesive 7. As a result, stator core 1 exhibits a larger magnetic imbalance.

For the clearance of 200 µm between stator core 1 and housing 6, the result of comprehensive judgment shows that the clearance is inappropriate for the following reasons.

That is, between stator core 1 and housing 6, there exists gap 18 with distance L. Into gap 18, anaerobic adhesive 7 is injected. As the clearance indicated by distance L becomes larger, the thickness of anaerobic adhesive 7, which is applied between stator core 1 and housing 6, becomes larger.

Incidentally, in the process where anaerobic adhesive 7 cures and shrinks, anaerobic adhesive 7 causes a stress on stator core 1. As the thickness of anaerobic adhesive 7 becomes larger, the stress on stator core becomes larger which is caused in the course of shrinking of anaerobic adhesive 7 when it cures. This reduces the magnetic permeability of stator core 1. As a result, the rotational position detector sometimes offers a deteriorated function of detecting position information.

Furthermore, for the clearance of 400 µm between stator core 1 and housing 6, the result of comprehensive judgment shows that the clearance is inappropriate for the following reasons.

That is, the clearance of 400 µm exceeds the limit beyond which anaerobic adhesive 7 cannot be cured in the gap between outer surface 1c of stator core 1 and inner peripheral surface 6a of housing 6. Therefore, the gap between stator core 1 and housing 6 cannot be bonded and hardened, resulting in a lack of strength of the bonding between stator core 1 and housing 6. This renders the rotational position detector difficult to offer the high durability required.

For the clearance in a range of not smaller than 50 µm and not larger than 150 µm between stator core 1 and housing 6, the result of comprehensive judgment shows that the clearance is appropriate for the following reasons.

That is, when stator core 1 is inserted into housing 6, stator core 1 sometimes tilts relative to housing 6. At this time, the clearance between stator core 1 and housing 6 remains large to the extent that outer surface 1c of stator core 1 is not in contact with inner peripheral surface 6a of housing 6. That is, no galling occurs between outer surface 1c of stator core 1 and inner peripheral surface 6a of housing 6. Therefore, the work for inserting stator core 1 into housing 6 does not require taking greater care than is necessary, resulting in easier work. In addition, the influence of the stress 7 cures and shrinks. As a result, the rotational position detector is allowed to prevent the reduction in accuracy of detecting position information.

In other word, when the clearance between stator core 1 and housing 6 is set to not smaller than 50 µm, it prevents the galling from occurring between the parts when stator core 1 is inserted into the inside of housing 6. The prevention of the occurrence of the galling between the parts can inhibit the stress on stator core 1 which is attributed to the galling.

Moreover, when the clearance between stator core 1 and housing 6 is set to not larger than 150 µm, it can minimize the amount of use of anaerobic adhesive 7 applied in gap 18. Therefore, in the course of shrinking of anaerobic adhesive 7 when it cures, the nonuniformity in the stress applied on stator core 1 can be reduced.

Consequently, gap 18 located between stator core 1 and housing 6 is set in the range of not smaller than 50 µm and not larger than 150 µm. With this configuration, the stress applied on stator core 1 is reduced, allowing the rotational position detector to provide the improved accuracy of detecting position information.

Table 4 shows a comparison of different viscosities of the adhesive.

**Table 4**

| Viscosity mPa ·s | 150 | 500 | 1500 | 2500 | 3000 | 5000 |
|---|---|---|---|---|---|---|
| Leakage and penetration to inner diameter of core | × | ○ | ○ | ○ | ○ | ○ |
| Bonding between cores | ○ | ○ | ○ | ○ | ○ | × |
| Workability | × | ○ | ○ | ○ | ○ | × |
| | Dripping occurs | | | | | wetting, is not spread |
| Comprehensive judgment | × | ○ | ○ | ○ | ○ | × |

For the case of using anaerobic adhesive 7 with a viscosity of 150 mPa ·s, the result of comprehensive judgment shows that the viscosity is inappropriate for the following reasons.

That is, anaerobic adhesive 7 is applied on outer surface 1c of stator core 1. Because of the low viscosity of anaerobic adhesive 7, thus-applied anaerobic adhesive 7 flows into between core sheets 1a that are stacked, with each sheet having a thickness of 0.35 mm. Anaerobic adhesive 7 flowing into between core sheets 1a leaks toward the center axis 14 side of stator core 1. This makes it difficult to secure the clearance between stator core 1 and the rotor core. As a result, the use of anaerobic adhesive 7 having the viscosity of 150 mPa ·s renders the rotational position detector unable to function as a rotational position detector.

In addition, the use of anaerobic adhesive 7 with the viscosity of 150 mPa ·s has the following problem as well.

That is, when stator core 1 with anaerobic adhesive 7 applied thereon is inserted into the inside of housing 6, applied anaerobic adhesive 7 drips from stator core 1 due to the low viscosity of anaerobic adhesive 7. This requires taking additional care to prevent thus-dripping anaerobic adhesive 7 from adhering to other parts, which poses a serious problem in workability.

For the case of using anaerobic adhesive 7 with a viscosity of 5000 mPa ·s, the result of comprehensive judgment shows that the viscosity is inappropriate for the following reasons.

That is, anaerobic adhesive 7 is applied on outer surface 1c of stator core 1. Because of the high viscosity of anaerobic adhesive 7, its wettability is low. Then, applied anaerobic adhesive 7 is difficult to spread on the surface of stator core 1. This requires an additional work for spreading anaerobic adhesive 7 on the surface of stator core 1, which poses a serious problem in workability.

Moreover, because of the low wettability of anaerobic adhesive 7, it is not easy to spread anaerobic adhesive 7 on the surface of stator core 1. Accordingly, when anaerobic adhesive 7 is applied to stator core 1, the surface of stator core 1 is segmented into different portions, i.e. portions with anaerobic adhesive 7 applied thereon and portions without any anaerobic adhesive 7. That is, applied anaerobic adhesive 7 exhibits nonuniformity in its application on the surface of stator core 1. Accordingly, the adhesive cannot provide the strength required for stable bonding between stator core 1 and housing 6. As a result, for the case of using anaerobic adhesive 7 with the viscosity of 5000 mPa ·s, the rotational position detector cannot offer the high durability required.

For the case of using anaerobic adhesive 7 with a viscosity in a range of not smaller than 500 mPa ·s and not larger than 3000 mPa ·s, the result of comprehensive judgment shows that the viscosity is appropriate for the following reasons.

That is, anaerobic adhesive 7 with the viscosity in the range of not smaller than 500 mPa ·s and not larger than 3000 mPa ·s, offers appropriate wettability. Then, when anaerobic adhesive 7 is applied on the surface of stator core 1, applied anaerobic adhesive 7 can be well spread on the surface of stator core 1, without nonuniformity. Accordingly, anaerobic adhesive 7 is uniformly spread between stator core 1 and housing 6. In addition, anaerobic adhesive 7 does not drip until anaerobic adhesive 7 becomes hard.

This allows easy control of the amount of anaerobic adhesive 7 applied between stator core 1 and housing 6, so that the even amount thereof is applied for each workpiece. Also, variations in the stress applied on stator core 1 can be minimized. As a result, the use of anaerobic adhesive 7 with the viscosity in the range of not smaller than 500 mPa ·s and not larger than 3000 mPa ·s, allows the rotational position detector to prevent a reduction in accuracy of detecting position information.

In other words, the use of anaerobic adhesive 7 with the viscosity of not smaller than 500 mPa ·s can offer the following advantages.

That is, in gap 18 located between stator core 1 and housing 6, it is possible to prevent anaerobic adhesive 7 from dripping during a period until applied anaerobic adhesive 7 becomes hard. This allows the control of the even amount of anaerobic adhesive 7 applied to gap 18. The evenness in the amount of anaerobic adhesive 7 applied to gap 18 prevents the variations in the stress applied on stator core 1.

Moreover, the use of anaerobic adhesive 7 with the viscosity of not larger than 3000 mPa ·s can offer the following advantages.

That is, anaerobic adhesive 7 applied between stator core 1 and housing 6 uniformly wets and spreads in gap 18, which prevents the variations in the stress applied on stator core 1.

Consequently, the use of anaerobic adhesive 7 with the viscosity in the range of not smaller than 500 mPa ·s and not larger than 3000 mPa ·s, allows the rotational position detector to prevent the reduction in accuracy of detecting position information.

As can be seen from the above descriptions, the inner peripheral surface of the housing and the outer surface of the stator core are located with the gap therebetween in the range of not smaller than 50 µm and not larger than 150 µm. This configuration allows the prevention of occurrence of the galling and the like between the parts when the stator core is inserted into the inside of the housing. Therefore, it is possible to prevent the stress applied on the stator core which is caused by factors including the galling between the parts. In addition, it is possible to reduce the nonuniformity in the stress applied on the stator core which is caused in the course of shrinking of the anaerobic adhesive when it cures.

Especially, the use of the anaerobic adhesive allows easy control of the even amount of the anaerobic adhesive which is applied to the gap between the stator core and the housing. In addition, even at room temperature, the anaerobic adhesive can be cured to bond the parts. This allows the prevention of the stress applied on the stator core which is caused by the difference in linear expansion coefficients of the materials concerned, i.e. the difference in linear expansion coefficients between the metal and the anaerobic adhesive. As a result, the rotational position detector is allowed to prevent the reduction in accuracy of detecting position information.

### SECOND EXEMPLARY EMBODIMENT

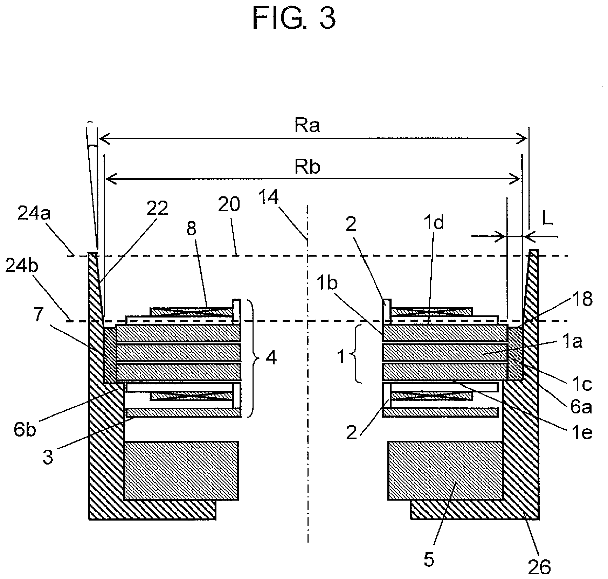

FIG. 3 is a cross-sectional view of a principal part of a rotational position detector according to a second embodiment of the present invention.

In the rotational position detector according to the second embodiment, housing 26 further includes insertion opening 20. Insertion opening 20 is one opening of housing 26. Insertion opening 20 is the opening through which stator core 1 is inserted into hosing 26.

Inner peripheral surface 6a of insertion opening 20 includes tapered face 22. Diameter Ra on the opening side of hosing 26 is the diameter of the circle defined by the intersection between tapered face 22 and plane 24a orthogonal to center axis 14. Diameter Rb on the center side of hosing 26 is the diameter of the circle defined by the intersection between tapered face 22 and plane 24b orthogonal to center axis 14. Tapered face 22 is such that diameter Ra on the opening side of hosing 26 is larger than diameter Rb on the center side of hosing 26.

Note that constituent elements of the same configuration as that of the rotational position detector according to the first embodiment are designated by the same numerals and symbols, and the descriptions in the first embodiment are incorporated herein by reference.

Hereinafter, descriptions will be made in detail with reference to FIG. 3.

When the clearance between stator core 1 and housing 6 is small, it requires the following improvements.

That is, anaerobic adhesive 7 is applied on stator core 1. Stator core 1 is inserted into the inside of housing 26 through insertion opening 20 of housing 26. At this time, the clearance between stator core 1 and housing 6 is so small that stator core 1 sometimes touches insertion opening 20 and the like. When stator core 1 touches insertion opening 20 and the like, anaerobic adhesive 7 applied on stator core 1 may be scraped off. Such the scraping of anaerobic adhesive 7 applied on stator core 1 may cause lack of strength of the fixing between stator core 1 and housing 26.

To address the situation, tapered face 22 is disposed on inner peripheral surface 6a of housing 26, on the insertion opening 20 side of housing 26. Then, the clearance between stator core 1 and housing 26 becomes larger at insertion opening 20 through which stator core 1 is inserted. With this configuration, it is possible to prevent anaerobic adhesive 7 from being scraped off.

In the second embodiment, angle θ of the taper is 7 degrees. With this configuration, the rotational position detector can ensure the high durability required. Moreover, it is possible to prevent anaerobic adhesive 7 applied between stator core 1 and housing 26 from being scraped off. This allows the uniform thickness of anaerobic adhesive 7 over the entire perimeter of gap 18 located between stator core 1 and housing 26. Therefore, it is possible to prevent the variations in the stress applied on stator core 1. As a result, the rotational position detector is allowed to prevent the reduction in accuracy of detecting position information.

Note that, when taper angle θ is set to be smaller, anaerobic adhesive 7 tends to be more often scraped off. In contrast, when taper angle θ is set to be larger, stiffness of housing 26 is reduced. The reduced stiffness of housing 26, in turn, decreases the durability as well required for the rotational position detector.

As can be seen from the above descriptions, the rotational position detector according to the second embodiment includes the tapered face that is disposed on the inner peripheral surface of the housing. With this configuration, when the stator core is inserted into the inside of the housing, it is possible to prevent the anaerobic adhesive 7 applied on the stator core from being scraped off. Therefore, the adhesive can be applied uniformly between the stator core and the housing. Such the uniform application of the anaerobic adhesive minimizes the variations in the stress applied on the stator core. As a result, the rotational position detector is allowed to prevent the reduction in accuracy of detecting position information.

### INDUSTRIAL APPLICABILITY

The rotational position detector according to the embodiments of the present invention is capable of preventing the reduction in accuracy as a sensor for detecting position information. In particular, the rotational position detector is useful in applications, which require highly-accurate position detection, such as servo motors for industrial use.

### REFERENCE MARKS IN THE DRAWINGS

- 1: stator core
- 1a: core sheet
- 1b: inner surface
- 1c: outer surface
- 1d: first plane
- 1e: second plane
- 2: insulator
- 3: base plate
- 4: sensor core
- 5: transformer core
- 6, 26: housing
- 6a: inner peripheral surface
- 6b: locking part
- 7: anaerobic adhesive
- 8: winding
- 10: rotational position detector
- 12: rotor
- 14: center axis
- 16: rotary shaft
- 18: gap
- 20: insertion opening
- 22: tapered face
- 24a, 24b: orthogonal plane

## Claims

1. A rotational position detector comprising:
a housing (6) having a cylindrical shape with a center axis (14), the housing (6) including
an inner peripheral surface (6a) extending along the center axis (14);
a rotor (12) housed inside the housing (6), the rotor (12) including
a rotary shaft (16) extending along the center axis (14);
a stator core (1) including
an inner surface (1b) housed inside the housing (6) and facing the rotor (12),
an outer surface (1c) facing the inner peripheral surface (6a), a first plane (1d) located orthogonal to the center axis (14), and a second plane (1e) located orthogonal to the center axis (14) and on an opposite side of the first plane (1d); wherein the first and second planes (1d, 1e) are located above and below each other, respectively;
first and second insulators (2), the first insulator being disposed on the first plane (1d) and the second insulator being disposed on the second plane (1e), a winding (8) being wound on the insulators (2); and
a transformer core (5) in which a secondary voltage is induced with a primary voltage being excited in the winding (8),
wherein the inner peripheral surface (6a) and the outer surface (1c) are located with a gap (18) therebetween in a range of not smaller than 50 µm and not larger than 150 µm, and an anaerobic adhesive (7) is disposed in the gap (18).

2. The rotational position detector according to claim 1, wherein the anaerobic adhesive (7) has a viscosity in a range of not smaller than 500 mPa -s and not larger than 3000 mPa -s.

3. The rotational position detector according to claim 1,
wherei n the housing (6) further includes an insertion opening (20), as one opening of the housing (6, 26), through which the stator core (1) is inserted into the housing (6);
the inner peripheral surface (6a) of the insertion opening includes a tapered face (22); and
the tapered face (22) is formed such that its diameter facing the outside of the housing (6) is larger than its diameter facing the inside of the housing (6), the diameters each being defined by an intersection between the tapered face (22) and a plane orthogonal to the center axis (14).

4. The rotational position detector according to claim 1, wherein the winding further includes a base plate (3) to which an end part of the winding (8) is attached.

5. The rotational position detector according to claim 4,
wherein the insulator (2) further includes a wire attaching part to which the end part of the winding (8) is attached, and
the end part of the winding (8) is attached to the base plate (3) via the wire attaching part.

## Patentansprüche

1. Drehpositionsdetektor, der Folgendes umfasst:
ein Gehäuse (6), das eine zylindrische Form mit einer Mittelachse (14) besitzt, wobei das Gehäuse (6) Folgendes enthält:
eine innere Umfangsoberfläche (6a), die sich längs der Mittelachse (14) erstreckt;
einen Rotor (12), der in dem Gehäuse (6) untergebracht ist, wobei der Rotor (12) Folgendes enthält:
eine Drehwelle (16), die sich längs der Mittelachse (14) erstreckt;
einen Statorkern (1), der Folgendes enthält:
eine innere Oberfläche (1b), die in dem Gehäuse (6) untergebracht ist und dem Rotor (12) zugewandt ist,
eine äußere Oberfläche (1c), die der inneren Umfangsoberfläche (6a) zugewandt ist,
eine erste Ebene (1d), die senkrecht zu der Mittelachse (14) orientiert ist, und
eine zweite Ebene (1e), die senkrecht zu der Mittelachse (14) orientiert ist und sich auf einer gegenüberliegenden Seite der ersten Ebene (1d) befindet; wobei sich die erste und die zweite Ebene (1d, 1e) über bzw. untereinander befinden;
einen ersten und einen zweiten Isolator (2), wobei der erste Isolator auf der ersten Ebene (1 d) angeordnet ist und der zweite Isolator auf der zweiten Ebene (1e) angeordnet ist,
eine Wicklung (8), die auf die Isolatoren (2) gewickelt ist; und
einen Transformatorkern (5), in dem eine Sekundärspannung induziert wird, wobei in der Wicklung (8) eine Primärspannung erregt wird,
wobei die innere Umfangsoberfläche (6a) und die äußere Oberfläche (1c) so angeordnet sind, dass sich dazwischen ein Spalt (18) in einem Bereich von nicht weiniger als 50 µm und nicht mehr als 150 µm befindet und wobei in dem Spalt (18) ein anaerober Klebstoff (7) angeordnet ist.

2. Drehpositionsdetektor nach Anspruch 1, wobei der anaerobe Klebstoff (7) eine Viskosität im Bereich von nicht weniger als 500 mPa·s und nicht mehr als 3000 mPa·s besitzt.

3. Drehpositionsdetektor nach Anspruch 1,
wobei das Gehäuse (6) ferner als eine Öffnung des Gehäuses (6, 26) eine Einsetzöffnung (20) aufweist, durch die der Statorkern (1) in das Gehäuse (6) eingesetzt wird;
die innere Umfangsoberfläche (6a) der Einsetzöffnung eine konisch verjüngte Fläche (22) aufweist; und
die konisch verjüngte Fläche (22) in der Weise geformt ist, dass ihr Durchmesser, der der äußeren Umgebung des Gehäuses (6) zugewandt ist, größer als ihr Durchmesser ist, der dem Innenraum des Gehäuses (6) zugewandt ist, wobei die Durchmesser jeweils durch einen Einschnitt zwischen der konisch verjüngten Fläche (22) und einer Ebene senkrecht zu der Mittelachse (14) definiert sind.

4. Drehpositionsdetektor nach Anspruch 1, wobei die Wicklung ferner eine Grundplatte (3) umfasst, an der ein Endabschnitt der Wicklung (8) angebracht ist.

5. Drehpositionsdetektor nach Anspruch 4,
wobei der Isolator (2) ferner einen Drahtanbringungsabschnitt umfasst, an dem der Endabschnitt der Wicklung (8) angebracht ist, und
der Endabschnitt der Wicklung (8) an der Grundplatte (3) über den Drahtanbringungsabschnitt angebracht ist.

## Revendications

1. Détecteur de position de rotation comprenant :
un boîtier (6) ayant une forme cylindrique avec un axe central (14), le boîtier (6) incluant
une surface périphérique intérieure (6a) s'étendant le long de l'axe central (14) ;
un rotor (12) logé à l'intérieur du boîtier (6), le rotor (12) incluant
un axe de rotation (16) s'étendant le long de l'axe central (14) ;
un noyau de stator (1) incluant
une surface intérieure (1b) logée à l'intérieur du boîtier (6) et faisant face au rotor (12),
une surface extérieure (1c) faisant face à la surface périphérique intérieure (6a)
un premier plan (1d) orthogonal à l'axe central (14), et
un second plan (1e) orthogonal à l'axe central (14) et situé sur un côté opposé au premier plan (1d) ; où le premier et le second plan (1d, 1e) sont respectivement situés au-dessus et en-dessous l'un de l'autre ;
des premiers et second isolateurs (2), le premier isolateur étant disposé sur le premier plan (1d) et le second isolateur étant disposé sur le second plan (1e), un enroulement (8) étant enroulé sur les isolateurs (2) ; et
un noyau de transformateur (5) dans lequel est induite une tension secondaire, une tension primaire alimentant l'enroulement (8),
où la surface périphérique intérieure (6a) et la surface extérieure (1c) sont disposées de part et d'autre d'un espace (18) non inférieur à 50 µm et non supérieur à 150 µm, et un adhésif anaérobie (7) est disposé dans l'espace (18).

2. Détecteur de position de rotation selon la revendication 1, où l'adhésif anaérobie (7) a une viscosité non inférieure à 500 mPa.s et non supérieure à 3000 mPA.s.

3. Détecteur de position de rotation selon la revendication 1,
où le boîtier (6) inclut en outre une ouverture d'insertion (20), en tant que l'une des ouvertures du boîtier (6, 26), à travers laquelle le noyau de stator (1) est inséré dans le boîtier (6) ;
la surface périphérique intérieure (6a) de l'ouverture d'insertion inclut une face biseautée (22) ; et
la face biseautée (22) est formée de telle manière que son diamètre faisant face à l'extérieur du boîtier (6) est plus grand que son diamètre faisant face à l'intérieur du boîtier (6), les diamètres étant chacun définis par une intersection entre la face biseautée (22) et un plan orthogonal à l'axe central (14).

4. Détecteur de position de rotation selon la revendication 1, où l'enroulement inclut en outre une plaque de base (3) à laquelle est fixée une partie d'extrémité de l'enroulement (8).

5. Détecteur de position de rotation selon la revendication 4, où
l'isolateur (2) inclut en outre une partie de fixation de fil à laquelle est fixée la partie d'extrémité de l'enroulement (8), et
la partie d'extrémité de l'enroulement (8) est fixée à la plaque de base (3) par l'intermédiaire de la partie de fixation de fil.
